# EUROPEAN PATENT APPLICATION

(11) **EP 4 137 958 A1**
(43) Date of publication of application: **22.02.2023**
(21) Application number: 21814314.7
(22) Date of filing: 30.04.2021
(51) Int. Cl.: G06F 16/21

(54) **METHOD AND APPARATUS FOR OPERATING DATA OBJECT, AND COMPUTING DEVICE AND STORAGE MEDIUM**

(30) Priority: 27.05.2020 CN 202010464045
(71) Applicant: Huawei Technologies Co., Ltd., Longgang District, Shenzhen, Guangdong 518129 (CN)
(72) Inventor: SHEN, Shengyu, Shenzhen, Guangdong 518129 (CN); CHENG, Zhongwu, Shenzhen, Guangdong 518129 (CN); WU, Yumin, Shenzhen, Guangdong 518129 (CN)
(74) Representative: Goddar, Heinz J.
(86) International application number: PCT/CN2021/091403
(87) International publication number: WO 2021/238583

(57) **Abstract**

This application provides a method, an apparatus, and a computing device for operating a data object, and a storage medium, and belongs to the field of computer technologies. The method includes: A first node obtains a request for operating a target data object. The first node determines that a storage node corresponding to the target data object is a second node. The first node sends an operation request for the target data object to the second node, where the operation request is used to indicate the second node to perform an operation indicated by the operation request. According to this application, an operation delay of a data object can be reduced.

## Description

This application claims priority to Chinese Patent Application No. 202010464045.X, filed with the China National Intellectual Property Administration on May 27, 2020 and entitled "METHOD, APPARATUS, AND COMPUTING DEVICE FOR OPERATING DATA OBJECT AND STORAGE MEDIUM", which is incorporated herein by reference in its entirety.

### TECHNICAL FIELD

This application relates to the field of computer technologies, and in particular, to a method, an apparatus, and a computing device for operating a data object, and a storage medium.

### BACKGROUND

A data center includes a plurality of nodes, and data objects may be shared between the plurality of nodes. Therefore, the nodes access data objects of each other.

In the related technology, when a node 1 accesses a data object 1 of a node 2, the node 1 sends an operation request of each part of the data object 1 to the node 2 by using the network each time, to implement an operation on the data object 1. For example, the data object 1 is a floating-point list, the data object 1=[1.2,20.1,3.5,4.6], and an operation performed by the node 1 is searching the data object 1 for 5.2. The node 1 sequentially sends an operation request for reading 1.2, an operation request for reading 20.1, an operation request for reading 3.5, and an operation request for reading 4.6 to the node 2. The node 1 can obtain a search result of searching for 5.2 only after a plurality of times of reading.

Because the node 1 needs to perform a plurality of times of remote access to operate the data object 1, a delay of operating the data object across nodes is relatively high.

### SUMMARY

This application provides a method, an apparatus, and a computing device for operating a data object, and a storage medium, to reduce a delay of cross-node accessing and operating a data object.

According to a first aspect, this application provides an apparatus for operating a data object, applied to a first node in a data center, where the data center includes the first node and a second node. The apparatus includes:
An application, configured to invoke a database interface to specify that a target operation is to be performed on a target data object; the database interface, configured to determine that a storage node corresponding to the target data object is the second node; and a communications module, configured to send an operation request for the target data object to the second node, where the operation request is used to indicate the second node to perform the target operation on the target data object.

In the solution shown in this application, when the application in the first node needs to perform an operation (which may be subsequently referred to as a target operation) on the target data object, the application may invoke the database interface to specify that the target operation is performed on the target data object. When the database interface of the first node receives invocation of the application, the database interface determines the storage node corresponding to the target data object, that is, obtains the second node corresponding to the target data object. The database interface of the first node notifies the communications module of the first node of an identifier of the second node, an identifier of the target data object, and an identifier of the target operation. The communications module may send an operation request for the target data object to the second node, where the operation request includes the identifier of the target data object and the identifier of the target operation, so that the second node performs the target operation on the target data object. In this way, the first node sends one operation request to the second node, so that the target operation can be performed on the target data object stored on the second node, and the first node does not need to interact with the second node for a plurality of times. Therefore, a cross-node access delay can be reduced.

In a possible implementation, when the target operation is a create operation, the database interface is configured to determine, based on one or more of node affinity, a load status, bandwidth, a delay, or a central processing unit (Central Processing Unit, CPU) occupation rate of each node in the data center, that the storage node corresponding to the target data object is the second node; and the database interface is further configured to store a correspondence between the target data object and the second node.

In the solution shown in this application, when the target operation is a creation operation, the database interface of the first node may select, from nodes in the data center, a node with least load as the second node. Alternatively, the database interface of the first node may select, from nodes in the data center, a node that has node affinity with the first node, and determine the node as the second node. Alternatively, the database interface of the first node may select, from nodes in the data center, a node with CPU usage as the second node. Alternatively, the database interface of the first node may select, from nodes in the data center, a node that has a minimum transmission delay with the first node as the second node. Alternatively, the database interface of the first node may select, from nodes in the data center, a node that has a maximum transmission bandwidth with the first node as the second node. Certainly, the database interface of the first node may select the second node by combining the foregoing multiple cases. Then, the database interface of the first node stores the correspondence between the target data object and the second node. In this way, an appropriate second node can be selected, and subsequently the first node can still access the target data object.

In a possible implementation, the database interface is configured to: determine, in a correspondence between the target data object and a storage node of the target data object, that the storage node corresponding to the target data object is the second node. In this way, the storage node corresponding to the target data object can be quickly obtained.

In a possible implementation, a data structure of the target data object is any one of a vector, a set, and a queue.

In a possible implementation, a type of the target operation further includes one or more of search, insertion, modification, or deletion.

According to a second aspect, this application provides an apparatus for operating a data object, applied to a second node in a data center, where the data center includes a first node and the second node. The apparatus includes:
A communications module, configured to receive an operation request that is for the target data object and that is sent by the first node; a database instance, configured to determine a target storage address of the target data object in the second node, and perform, based on the target storage address, a target operation indicated by the operation request on the target data object.

In the solution shown in this application, the communications module of the second node receives the operation request that is for the target data object and that is sent by the first node, and the communications module of the second node forwards the operation request to the database instance of the second node. The database instance of the second node determines a target storage address of the target data object. The database instance of the second node may access the target storage address, and perform, on the target data object stored at the target storage address, the target operation indicated by the operation request. In this way, the first node sends one operation request to the second node, so that the target operation can be performed on the target data object stored on the second node, and the first node does not need to interact with the second node for a plurality of times. Therefore, a cross-node access delay can be reduced.

In a possible implementation, when the target operation is a create operation, the database instance of the second node is configured to store the target data object at the target storage address. The database instance is further configured to: store a correspondence between the target data object and the target storage address, and store a correspondence between the target data object and the second node. In this way, it can be convenient for the second node to find the target data object.

In a possible implementation, the database instance is configured to determine, in a correspondence between the target data object and a storage address of the target data object, a target storage address of the target data object in the second node. In this way, the second node can quickly find the storage address of the target data object.

In a possible implementation, when the target operation is deletion, the database instance of the second node is configured to: access the target storage address, and delete the target data object; delete the correspondence between the target data object and the storage address of the target data object; and delete the correspondence between the target data object and a storage node of the target data object. In this way, storage resources can be saved.

In a possible implementation, the communications module of the second node is further configured to: before deleting the correspondence between the target data object and the storage node of the target data object, send a deletion message to a node other than the second node in the data center, where the deletion message is used to indicate a node that receives the deletion message to delete the correspondence between the target data object and the storage node of the target data object. In this way, another node can be prevented from continuing to send an operation request to the second node when operating the target data object, thereby reducing a possibility of an operation failure.

In a possible implementation, the communications module is further configured to receive a migration request for the target data object, where the migration request carries an identifier of a storage node to which the target data object is migrated. The database instance is further configured to lock the target data object. The communications module is further configured to: send a copy request for the target data object to the storage node to which the target data object is migrated, where the copy request is used to indicate the storage node to which the target data object is migrated to store a correspondence between the target data object and the storage node to which the target data object is migrated, and to store a correspondence between the target data object and a storage address of the target data object in the storage node to which the target data object is migrated; and receive a copy complete message sent by the storage node to which the target data object is migrated. The database instance is further configured to unlock and delete the target data object.

In the solution shown in this application, the communications module of the second node receives the migration request for the target data object, and sends the migration request to the database instance of the second node. The database instance of the second node parses the migration request to obtain an identifier of the target data object, and then locks the target data object. The communications module of the second node sends the copy request to a communications module of the storage node to which the target data object is migrated. After receiving the copy request, the storage node to which the target data object is migrated may parse the copy request to obtain content of the target data object. The storage node to which the target data object is migrated may determine, in local storage space (that is, a memory), a storage address for storing the target data object. Then, the storage node to which the target data object is migrated may store a correspondence between the target data object and the storage address, and stores the correspondence between the target data object and the storage node to which the target data object is migrated. In this way, the storage address of the target data object is stored in the storage node to which the target data object is migrated, so that the target data object can be easily found.

In a possible implementation, the communications module is further configured to: before unlocking and deleting the target data object, send a change message of the storage node of the target data object to another node, where the change message is used to indicate a node that receives the change message to change a storage node corresponding to the target data object to the storage node to which the target data object is migrated, and the another node is a node other than the storage node to which the target data object is migrated and the second node in the data center; and receive a change completion message sent by the another node. In this way, when operating the target data object, the another node can access the storage node to which the target data object is migrated, thereby reducing invalid access.

In a possible implementation, when the target data object is a nested data object, the communications module is further configured to: determine a storage node corresponding to each sub-data object in the target data object; and if a storage node corresponding to a first sub-data object in the target data object is a third node, send an operation request for the first sub-data object to the third node, where the operation request for the first sub-data object is used to indicate the third node to perform a target operation indicated by the operation request for the first sub-data object. The database instance is further configured to: if a storage node corresponding to a second sub-data object in the target data object is the second node, determine a storage address, in the second node, of the second sub-data object in the target data object; and perform, on the second sub-data object based on the storage address of the second sub-data object in the second node, a target operation indicated by the operation request.

In the solution shown in this application, when the target data object is a nested data object, the storage node corresponding to each sub-data object of the target data object is stored in the correspondence between the target data object and the storage node of the target data object. The communications module of the second node searches the correspondence for the storage node corresponding to each sub-data object in the target data object. When the communications module of the second node determines that the storage node corresponding to the first sub-data object in the target data object is the third node, the communications module of the second node may send the operation request for the first sub-data object to the third node, and the operation request includes an identifier of the first sub-data object. After receiving the operation request for the first sub-data object, a communications module of the third node may send the operation request for the first sub-data object to a database instance of the third node. The database instance of the third node determines the storage address corresponding to the first sub-data object. Then, the database instance of the third node accesses the storage address, and performs the target operation indicated by the operation request for the first sub-data object on the first sub-data object. When the communications module of the second node determines that the storage node corresponding to the second sub-data object in the target data object is the second node, the communications module of the second node may send an operation request for the second sub-data object of the target data object to the database instance of the second node. After receiving the operation request, the database instance of the second node may determine a storage address corresponding to the second sub-data object of the target data object, that is, obtain the storage address of the second sub-data object in the second node. The database instance of the second node may access the storage address of the second sub-data object in the second node, and perform the operation indicated by the operation request on the second sub-data object. In this way, when the target data object is a nested data object, an operation request may be sent once to implement an operation on the target data object, thereby reducing an operation delay.

In a possible implementation, a data structure of the target data object is any one of a vector, a set, and a queue.

According to a third aspect, this application provides a method for operating a data object, applied to a data center, where the data center includes a first node and a second node, and the method includes: The first node determines to perform a target operation on the target data object. The first node determines that a storage node corresponding to the target data object is the second node. The first node sends an operation request for the target data obj ect to the second node, where the operation request is used to indicate the second node to perform the target operation on the target data object. In this way, the first node sends one operation request to the second node, so that the target operation can be performed on the target data object stored on the second node, and the first node does not need to interact with the second node for a plurality of times. Therefore, a cross-node access delay can be reduced.

In a possible implementation, when the target operation is a create operation, that the first node determines that a storage node corresponding to the target data object is the second node includes: The first node determines, based on one or more of node affinity, a load status, bandwidth, a delay, or central processing unit CPU usage of each node in the data center, that the storage node corresponding to the target data object is the second node. The method further includes: The first node stores a correspondence between the target data object and the second node. In this way, an appropriate second node can be selected, and subsequently, the first node can still access the target data object.

In a possible implementation, that the first node determines that a storage node corresponding to the target data object is the second node includes: The first node determines, in a stored correspondence between the target data object and a storage node of the target data object, that the storage node corresponding to the target data object is the second node. In this way, the storage node corresponding to the target data object can be quickly obtained.

In a possible implementation, a data structure of the target data object is any one of a vector, a set, and a queue.

In a possible implementation, a type of the target operation further includes one or more of search, insertion, modification, or deletion.

According to a fourth aspect, this application provides a method for operating a data object, applied to a data center, where the data center includes a first node and a second node, and the method includes: The second node receives an operation request that is for the target data object and that is sent by the first node. The second node determines a target storage address of the target data object in the second node. The second node performs, based on the target storage address, a target operation indicated by the operation request on the target data object. In this way, the first node sends one operation request to the second node, so that the target operation can be performed on the target data object stored on the second node, and the first node does not need to interact with the second node for a plurality of times. Therefore, a cross-node access delay can be reduced.

In a possible implementation, when the target operation is a create operation, that the second node performs, based on the target storage address, a target operation indicated by the operation request on the target data object includes storing the target data object at the target storage address. The method further includes: The second node stores a correspondence between the target data object and the target storage address, and stores a correspondence between the target data object and the second node. In this way, it can be convenient for the second node to find the target data object.

In a possible implementation, that the second node determines a target storage address of the target data object in the second node includes: The second node determines, based on a correspondence between the target data object and a storage address of the target data object, the target storage address of the target data object in the second node. In this way, the second node can quickly find the storage address of the target data object.

In a possible implementation, when the type of the target operation is deletion, the performing, on the target data object based on the target storage address, an operation indicated by the operation request includes: The second node accesses the target storage address, and deletes the target data object. The second node deletes the correspondence between the target data object and the storage address of the target data object. The second node deletes the correspondence between the target data object and the storage node of the target data object. In this way, storage resources can be saved.

In a possible implementation, before deleting the correspondence between the target data object and the storage node of the target data object, the method further includes: The second node send a deletion message to a node other than the second node in the data center, where the deletion message is used to indicate a node that receives the deletion message to delete the correspondence between the target data object and the storage node of the target data object. In this way, another node can be prevented from continuing to send an operation request to the second node when operating the target data object, thereby reducing a possibility of an operation failure.

In a possible implementation, the method further includes: The second node receives a migration request for the target data object, where the migration request carries an identifier of a storage node to which the target data object is migrated. The second node locks the target data object. The second node sends a copy request for the target data object to the storage node to which the target data object is migrated, where the copy request is used to indicate the storage node to which the target data object is migrated to store a correspondence between the target data object and the storage node to which the target data object is migrated, and to store a correspondence between the target data object and a storage address of the target data object in the storage node to which the target data object is migrated. The second node receives a copy complete message sent by the storage node to which the target data object is migrated, and unlocks and deletes the target data object. In this way, the storage address of the target data object is stored in the storage node to which the target data object is migrated, so that the target data object can be easily found.

In a possible implementation, before unlocking and deleting the target data object, the method further includes: The second node sends a change message of the storage node of the target data object to another node, where the change message is used to indicate a node that receives the change message to change a storage node corresponding to the target data object to the storage node to which the target data object is migrated, and the another node is a node other than the storage node to which the target data object is migrated and the second node in the data center. The second node receives a change completion message sent by the another node. In this way, when operating the target data object, the another node can access the storage node to which the target data object is migrated, thereby reducing invalid access.

In a possible implementation, when the target data object is a nested data object, the method further includes: The second node determines a storage node corresponding to each sub-data object in the target data object. If a storage node corresponding to a first sub-data object in the target data object is a third node, the second node sends an operation request for the first sub-data object to the third node, where the operation request for the first sub-data object is used to indicate the third node to perform a target operation indicated by the operation request for the first sub-data object. If a storage node corresponding to a second sub-data object in the target data object is the second node, the second node determines a storage address, in the second node, of the second sub-data object in the target data object. The second node performs, on the second sub-data object based on the storage address of the second sub-data object in the second node, a target operation indicated by the operation request. In this way, when the target data object is a nested data object, an operation request may be sent once to implement an operation on the target data object, thereby reducing an operation delay.

According to a fifth aspect, a computing device for operating a data object is provided. The computing device includes a processor and a memory, the memory stores computer instructions, and the processor executes the computer instructions to implement the method in the third aspect and the possible implementations of the third aspect.

According to a sixth aspect, a computing device for operating a data object is provided. The computing device includes a processor and a memory, the memory stores computer instructions, and the processor executes the computer instructions to implement the method in the fourth aspect and the possible implementations of the fourth aspect.

According to a seventh aspect, a computer-readable storage medium is provided. The computer-readable storage medium stores computer instructions. When the computer instructions in the computer-readable storage medium are executed by a computing device, the computing device is enabled to perform the method in the third aspect and the possible implementations of the third aspect, or the computing device is enabled to implement functions of the apparatus in the first aspect and the possible implementations of the first aspect.

According to an eighth aspect, a computer-readable storage medium is provided. The computer-readable storage medium stores computer instructions. When the computer instructions in the computer-readable storage medium are executed by a computing device, the computing device is enabled to perform the method in the fourth aspect and the possible implementations of the fourth aspect, or the computing device is enabled to implement functions of the apparatus in the second aspect and the possible implementations of the second aspect.

According to a ninth aspect, a computer program product including instructions is provided. When the computer program product runs on a computing device, the computing device is enabled to perform the method in the third aspect and the possible implementations of the third aspect, or the computing device is enabled to implement functions of the apparatus in the first aspect and the possible implementations of the first aspect.

According to a tenth aspect, a computer program product including instructions is provided. When the computer program product runs on a computing device, the computing device is enabled to perform the method in the fourth aspect and the possible implementations of the fourth aspect, or the computing device is enabled to implement functions of the apparatus in the second aspect and the possible implementations of the second aspect.

According to an eleventh aspect, a system for operating a data object is provided. The system includes a first node and a second node, the first node is the apparatus for operating a data object according to the first aspect, and the second node is the apparatus for operating a data object according to the second aspect.

### BRIEF DESCRIPTION OF DRAWINGS

FIG. 1 is an architectural diagram of a system for operating a data object according to an example embodiment of this application;
FIG. 2 is a schematic diagram of a structure of a node in a data center according to an example embodiment of this application;
FIG. 3 is a schematic diagram of a structure of a node in a data center according to an example embodiment of this application;
FIG. 4 is a schematic flowchart of a method for operating a data object according to an example embodiment of this application;
FIG. 5 is a schematic flowchart of a method for operating a data object according to an example embodiment of this application;
FIG. 6 is a schematic diagram of a route for operating a data object according to an example embodiment of this application;
FIG. 7 is a schematic flowchart of a method for creating a data object according to an example embodiment of this application;
FIG. 8 is a schematic diagram of a route for creating a data object according to an example embodiment of this application;
FIG. 9 is an architectural diagram of a system for operating a data object according to an example embodiment of this application;
FIG. 10 is a schematic flowchart of a method for migrating a data object according to an example embodiment of this application;
FIG. 11 is a schematic diagram of a route for migrating a data object according to an example embodiment of this application;
FIG. 12 is a schematic flowchart of a method for operating a data object according to an example embodiment of this application;
FIG. 13 is a schematic diagram of a route for operating a data object according to an example embodiment of this application; and
FIG. 14 is a schematic diagram of a structure of a computing device according to an example embodiment of this application.

### DESCRIPTION OF EMBODIMENTS

To make the objectives, technical solutions, and advantages of this application clearer, the following further describes the implementations of this application in detail with reference to the accompanying drawings.

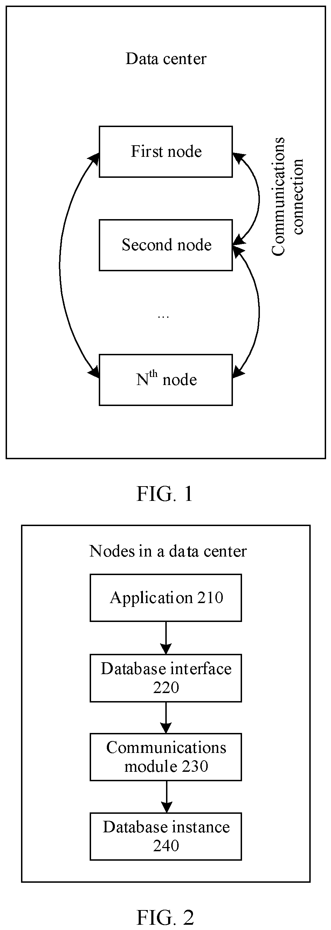

To reduce a delay of operating a data object across nodes, an embodiment of this application provides a method for operating a data object. The method may be applied to a data center. As shown in FIG. 1, the data center includes a plurality of nodes (the plurality of nodes include a first node and a second node that are described below, and the first node and the second node are different nodes). Each node may be a computing device, and an application is deployed on each node. A wired or wireless communications connection is established between the nodes. Each node included in the data center may also be a virtual machine.

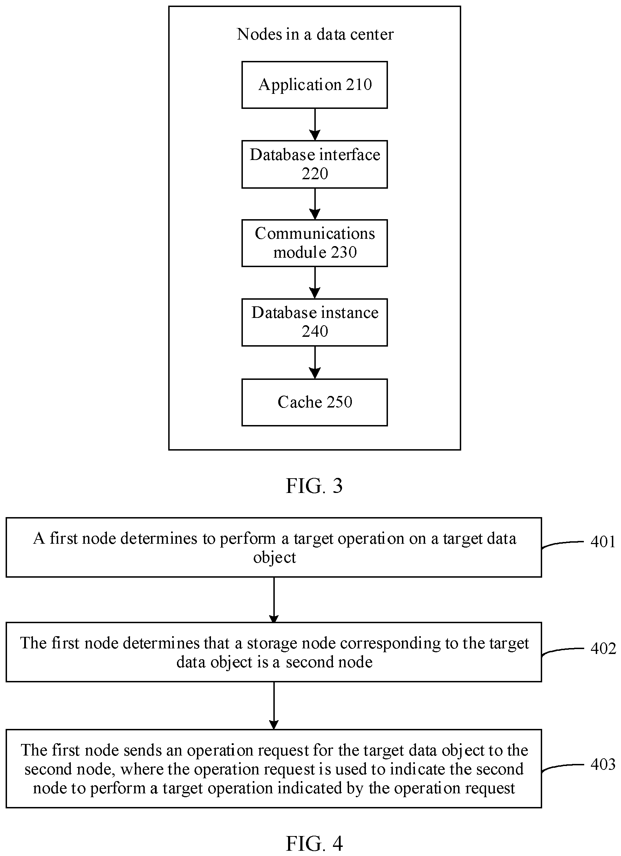

As shown in FIG. 2, logically, the node in the data center may also be an apparatus including a plurality of parts. For example, the node in the data center may include an application 210, a database interface 220, a communications module 230, a database instance 240, and the like. The application 210 may be any application. The database interface 220 includes various interface functions, the database interface 220 is configured to determine a node for storing the data object. The communications module 230 is configured to communicate with another node. The database instance 240 is configured to perform operating on the data object. In addition, as shown in FIG. 3, the node in the data center may further include a cache (cache) 250 and the like, and the cache is configured to cache data and the like.

The first node provided in this embodiment of this application may implement the following procedure in FIG. 4. The application 210 is configured to invoke the database interface 220 to specify that a target operation is to be performed on a target data object.

The database interface 220 is configured to determine that a storage node corresponding to the target data object is the second node.

The communications module 230 is configured to send an operation request for the target data object to the second node, where the operation request is used to indicate the second node to perform the target operation on the target data object.

In a possible implementation, when the target operation is a creation operation, the database interface 220 is configured to determine, based on one or more of node affinity, a load status, bandwidth, a delay, or central processing unit CPU usage of each node in the data center, that the storage node corresponding to the target data object is the second node.

The database interface 220 is further configured to store a correspondence between the target data object and the second node.

In a possible implementation, the database interface 220 is configured to determine, in a stored correspondence between the target data object and a storage node of the target data object, that the storage node corresponding to the target data object is the second node.

In a possible implementation, a data structure of the target data object is any one of a vector, a set, and a queue.

In a possible implementation, a type of the target operation further includes one or more of search, insertion, modification, or deletion.

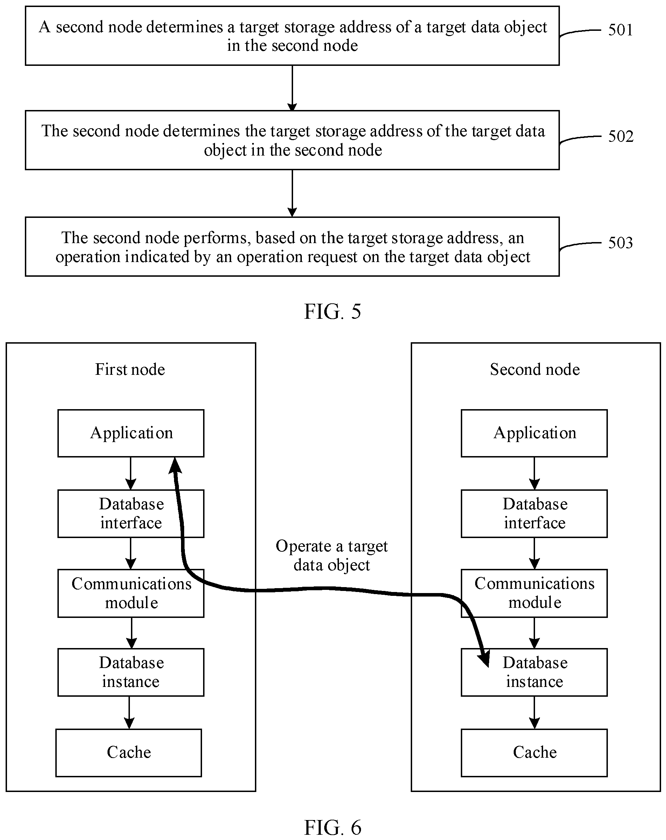

The second node provided in this embodiment of this application may implement the following procedure in FIG. 5. The communications module 230 is configured to receive an operation request that is for a target data object and that is sent by a first node.

The database instance 240 is configured to: determine a target storage address of the target data object in the second node; and perform, based on the target storage address, a target operation indicated by the operation request on the target data object.

In a possible implementation, when the target operation is a creation operation, the database instance 240 is configured to store the target data object at the target storage address.

The database instance 240 is further configured to: store a correspondence between the target data object and the target storage address, and store a correspondence between the target data object and the second node.

In a possible implementation, a type of the operation request is deletion. The database instance 240 is configured to determine, in a stored correspondence between the target data object and a storage address of the target data object, a target storage address of the target data object in the second node.

In a possible implementation, when the target operation is deletion, the database instance 240 is configured to: access the target storage address, and delete the target data object; delete the correspondence between the target data object and the storage address of the target data object; and delete the correspondence between the target data object and a storage node of the target data object.

In a possible implementation, the communications module 230 is further configured to: before deleting the correspondence between the target data object and the storage node of the target data object, send a deletion message to a node other than the second node in the data center, where the deletion message is used to indicate a node that receives the deletion message to delete the correspondence between the target data object and the storage node of the target data object.

In a possible implementation, the communications module 230 is further configured to receive a migration request for the target data object, where the migration request carries an identifier of a storage node to which the target data object is migrated. The database instance 240 is further configured to lock the target data object. The communications module 230 is further configured to: send a copy request for the target data object to the storage node to which the target data object is migrated, where the copy request is used to indicate the storage node to which the target data object is migrated to store a correspondence between the target data object and the storage node to which the target data object is migrated, and to store a correspondence between the target data object and a storage address of the target data object in the storage node to which the target data object is migrated; and receive a copy complete message sent by the storage node to which the target data object is migrated. The database instance 240 is further configured to unlock and delete the target data object.

In a possible implementation, the communications module 230 is further configured to: before unlocking and deleting the target data object, send a change message of the storage node of the target data object to another node, where the change message is used to indicate a node that receives the change message to change a storage node corresponding to the target data object to the storage node to which the target data object is migrated, and the another node is a node other than the storage node to which the target data object is migrated and the second node in the data center; and receive a change completion message sent by the another node.

In a possible implementation, when the target data object is a nested data object, the communications module 230 is further configured to: determine a storage node corresponding to each sub-data object in the target data object; and if a storage node corresponding to a first sub-data object in the target data object is a third node, send an operation request for the first sub-data object to the third node, where the operation request for the first sub-data object is used to indicate the third node to perform a target operation indicated by the operation request for the first sub-data object. The database instance 240 is further configured to: if a storage node corresponding to a second sub-data object in the target data object is the second node, determine a storage address, in the second node, of the second sub-data object in the target data object; and perform, on the second sub-data object based on the storage address of the second sub-data object in the second node, a target operation indicated by the operation request.

In a possible implementation, a data structure of the target data object is any one of a vector, a set, and a queue.

It should be noted herein that module division in embodiments of this application is an example, and is merely logical function division. In actual implementation, there may be another division manner. In addition, functional modules in embodiments of this application may be integrated into one processor. Alternatively, the module may exist alone physically, or two or more modules may be integrated into one module. The integrated module may be implemented in a form of hardware, or may be implemented in a form of a software functional module.

The method for operating a data object may be executed by a node in a data center. The node may be a hardware apparatus, for example, a computing device such as a server or a terminal, or may be a software apparatus, for example, may be a set of software programs running on a hardware apparatus.

The following describes, with reference to FIG. 4, a data object operation method provided in an embodiment of this application. The method may be performed by a first node. As shown in FIG. 4, a processing procedure of the method is as follows:
Step 401: The first node determines to perform a target operation on a target data object.

The target data object is any data object. A data structure of the target data object is any one of a vector, a set, and a queue.

In this embodiment, when an application in the first node needs to perform an operation (which may be subsequently referred to as a target operation) on the target data object, the application may invoke a database interface to specify that the target operation is performed on the target data object.

Step 402: The first node determines that a storage node corresponding to the target data object is a second node.

In a possible implementation, when the target operation is not a creation operation, the first node stores a correspondence between the target data object and a storage node of the target data object. The correspondence may be stored in a table format, or may be stored in another format. This is not limited in this embodiment of this application. When a database interface of the first node receives invocation of the application, the database interface may obtain the correspondence that is between the target data object and the storage node of the target data object and that is stored in the first node. The database interface searches the correspondence for the storage node corresponding to the target data object, that is, obtains the second node corresponding to the target data obj ect.

In addition, when the database interface of the first node determines, in the stored correspondence between the target data object and the storage node of the target data object, that the storage node corresponding to the target data object is the first node, the database interface of the first node may notify a communications module of the first node of an identifier of the first node, an identifier of the target data object, and the target operation. The communications module of the first node may send an operation request for the target data object to the database instance of the first node. The database instance of the first node performs the target operation on the target data object (this process is the same as performing the target operation on the target data object by the database instance of the second node, and is described below, and details are not described herein again).

Step 403: The first node sends the operation request for a target data object to the second node, where the operation request is used to indicate the second node to perform a target operation indicated by the operation request.

In this embodiment, the database interface of the first node notifies the communications module of the first node of an identifier of the second node, the identifier of the target data object, and an identifier of the target operation. The communications module may send the operation request for the target data object to the second node, and the operation request includes the identifier of the target data object and the identifier of the target operation.

Optionally, the first node may further receive an execution result returned by the second node. Specifically, after completing performing the target operation on the target data, the second node sends the execution result to the first node by using a communications module of the second node. The communications module of the first node receives the execution result sent by the communications module of the second node, and the communications module of the first node returns the execution result to the database interface of the first node. The database interface of the first node returns the execution result to the application of the first node.

In a possible implementation, a type of the target operation further includes one or more of creation, search, insertion, modification, or deletion. Creation refers to storing the target data object. Search refers to searching for content in the target data object. Insertion refers to inserting new content into the target data object. Modification refers to modifying part or all of the content in the target data object. Deletion refers to deleting the target data object.

In this way, according to the procedure in FIG. 4, the first node can perform, by sending an operation request once, an operation on the target data object stored on the second node, thereby reducing a delay of cross-node access to the data object.

The following describes, with reference to FIG. 5, a data object operation method provided in an embodiment of this application. The method may be performed by a second node. As shown in FIG. 5, a processing procedure of the method is as follows:

Step 501: The second node receives an operation request that is for a target data object and that is sent by a first node.

In this embodiment, a communications module of the second node receives the operation request that is for the target data object and that is sent by the first node, and the communications module of the second node forwards the operation request to a database instance of the second node.

It should be noted herein that, after receiving the operation request that is for the target data object and that is sent by the first node, the communications module of the second node may further determine whether the target data object is a nested object. When the target data object is not a nested object, a procedure of steps 502 to 504 may be performed. When the target data object is a nested object, the execution process is described in the following sections. When the nested object is determined, whether a plurality of sub-objects included in the target data object are all stored in the second node may be determined based on a correspondence between the target data object and a storage node corresponding to the target data object. If the plurality of sub-objects are all stored in the second node, the plurality of sub-obj ects are not nested data objects. If the plurality of sub-objects are not all stored on the second node, the target data object is a nested data object.

Step 502: The second node determines a target storage address of the target data object in the second node.

In a possible implementation, when the target operation is not a creation operation, the second node stores a correspondence between the target data object and a storage node of the target data object. The correspondence may be stored in a table format, or may be stored in another format. This is not limited in this embodiment of this application. A database instance of the second node obtains the correspondence that is between the target data object and the storage address of the target data object and that is stored in the second node, and the database instance obtains, from the correspondence, the target storage address corresponding to the target data object.

Step 503: The second node performs, based on the target storage address, an operation indicated by the operation request on the target data object.

In this embodiment, the database instance of the second node may access the target storage address, and perform, on the target data object stored at the target storage address, the target operation indicated by the operation request. For example, when the target operation indicated by the operation request is a modification operation, the database instance modifies the target data object, and an obtained execution result is a modification completion notification.

Optionally, the second node may return the execution result to the first node. Specifically, after completing performing the target operation, the database instance of the second node obtains the execution result, and the communications module of the second node sends the execution result to a communications module of the first node.

In this way, the operation performed on the target data object is performed by the node storing the target data object. The node requesting to operate the target data object needs to invoke the database interface once, and performs cross-network access only once. Therefore, a delay of cross-node access to the data object can be reduced.

In a possible implementation, a data structure of the target data object may be any one of a vector, a set, a queue, and the like.

In a possible implementation, when the target operation is deletion, processing in step 503 may be:
The second node accesses the target storage address, and deletes the target data object. The second node deletes a correspondence between the target data object and the storage address of the target data object. The second node deletes a correspondence between the target data object and the storage node of the target data object.

In this embodiment, when determining that the target operation is deletion, the database instance of the second node may access a locally stored target storage address of the target data object, and delete the target data object. The database instance of the second node deletes, from the second node, the correspondence between the target data object and the storage address of the target data object. The database instance of the second node deletes, from the second node, the correspondence between the target data object and the storage node of the target data object.

In a possible implementation, before deleting the correspondence between the target data object and the storage node of the target data object, the database instance of the second node further performs the following processing:
The second node sends a deletion message to nodes other than the second node in the data center, where the deletion message is used to indicate a node that receives the deletion message to delete the correspondence between the target data object and the storage node of the target data object.

In this embodiment, the database instance of the second node may determine nodes other than the second node in the data center (these nodes are nodes that may access the target data object in the data center), and then notify the communications module of the second node of identifiers and deletion messages of these nodes. The communications module of the second node may send the deletion message to the nodes indicated by the identifiers of these nodes. Anode that receives the deletion message may delete the correspondence between the target data object and the storage node of the target data object. In this way, when a node in subsequent data searches for the target data object, the node does not search for the target data object on the second node, thereby reducing invalid access.

In addition, to facilitate understanding of the procedures in FIG. 4 and FIG. 5, as shown in FIG. 6, an embodiment of this application further provides a message transmission path between the first node and the second node, as shown by a double-arrow curve in FIG. 6.

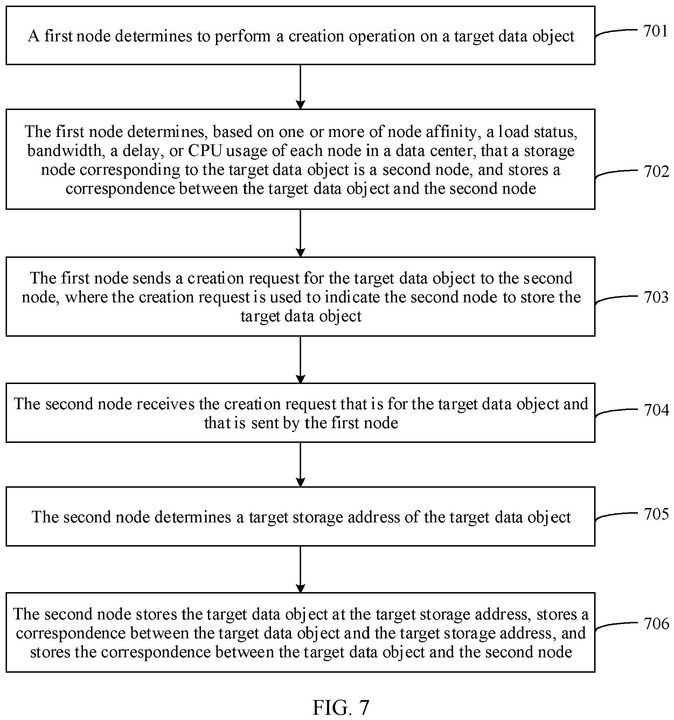

In a possible implementation, when the target operation is a creation operation, corresponding to the procedures in FIG. 4 and FIG. 5, an embodiment of this application further provides a procedure of creating a target data object on a second node as shown in FIG. 7.

Step 701: A first node determines to perform a creation operation on the target data obj ect.

In this embodiment, an application of the first node needs to create the target data object. The application may invoke a database interface to specify the database interface to create the target data object.

Step 702: The first node determines, based on one or more of node affinity, a load status, bandwidth, a delay, or CPU usage of each node in the data center, that a storage node corresponding to the target data object is the second node, and stores a correspondence between the target data object and the second node.

For any node, node affinity of the node may be reflected by using a data transmission distance between the node and another node. For example, if a transmission distance between the node and a node 1 exceeds a specific value, the node does not have node affinity with the node 1. If the transmission distance between the node and the node 1 is smaller than a specific value, the node has node affinity with the node 1. The load can be reflected by memory usage.

In this embodiment, a database interface of the first node may also generate a pointer (that is, an identifier of the target data object) for the target data object, and then the database interface determines a storage node corresponding to the target data object. If the storage node is the second node, the database interface of the first node stores the correspondence between the target data object and the second node. The database interface of the first node sends an identifier of the second node and content of the target data object to a communications module of the first node. Specifically, a process in which the first node determines the storage node corresponding to the target data object is as follows: The first node may select, from nodes in the data center, a node with least load, and determine the node as the second node. Alternatively, the first node may select, from nodes in the data center, a node that has node affinity with the first node, and determine the node as the second node. Alternatively, the first node may select, from nodes in the data center, a node with CPU usage, and determine the node as the second node. Alternatively, the first node may select, from nodes in the data center, a node that has a minimum transmission delay with the first node, and determine the node as the second node. Alternatively, the first node may select, from nodes in the data center, a node that has a maximum transmission bandwidth with the first node, and determine the node as the second node. Certainly, the first node may select the second node by combining the foregoing multiple cases. For example, the first node selects, from nodes in the data center, nodes that have node affinity with the first node, and then selects, from these nodes, a node with least load as the second node.

If the first node determines that the storage node corresponding to the target data object is the first node, the database interface of the first node stores a correspondence between the target data object and the first node. The database interface of the first node sends an identifier of the first node and the content of the target data object to the communications module of the first node. The communications module of the first node sends an operation request to the database instance of the first node. The database instance of the first node creates the target data object, and returns an execution result to the communications module of the first node. The communications module of the first node returns the execution result to the database interface of the first node. The database interface of the first node returns the execution result to the application of the first node.

Step 703: The first node sends a creation request for the target data object to the second node, where the creation request is used to indicate the second node to store the target data object.

In this embodiment, the communications module of the first node receives the identifier of the second node and the content of the target data object. The communications module of the first node sends the creation request for the target data object to a communications module of the second node. The creation request includes an identifier of the target data object and the content of the target data obj ect.

Step 704: The second node receives the creation request that is for the target data object and that is sent by the first node.

In this embodiment, the communications module of the second node receives the creation request that is for the target data object and that is sent by the communications module of the first node. The communications module of the second node sends the creation request to a database instance of the second node.

Step 705: The second node determines a target storage address of the target data object.

In this embodiment, the database instance of the second node determines a local target storage address of the target data object in local storage space (the storage space may be a memory of the second node).

Step 706: The second node stores the target data object at the target storage address, stores a correspondence between the target data object and the target storage address, and stores the correspondence between the target data object and the second node.

In this embodiment, the database instance of the second node stores the target data object at the target storage address, the database instance of the second node stores the correspondence between the target data object and the target storage address, and the database instance of the second node stores the correspondence between the target data object and the second node. After storing the target data object, the database instance of the second node may send a creation completion notification to the communications module of the second node.

Optionally, the second node may send a creation result to the first node. Specifically, the communications module of the second node may send the creation result to the communications module of the first node. If the creation succeeds, the creation result is a creation success result. If the creation fails, the creation result is a creation failure result. The communications module of the first node receives the creation result sent by the communications module of the second node. The communications module of the first node returns the creation result to the database interface of the first node, the database interface of the first node returns the creation result to the application of the first node, and the application of the first node may obtain the creation result of the target data object. In this way, data objects can be created across nodes.

Optionally, after step 706, if the second node determines that the target data object is successfully created, the second node may send a notification of the storage node corresponding to the target data object to another node in the data center except the first node and the second node. In this way, a node that receives the notification may store the correspondence between the target data object and the second node, to facilitate subsequent access to the target data object.

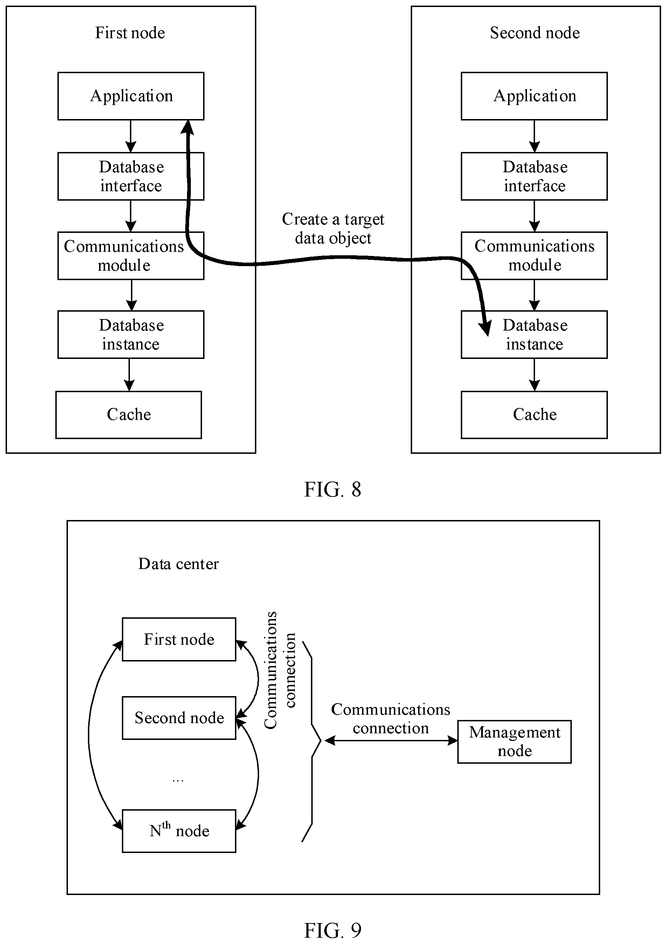

In addition, to facilitate understanding of the procedure in FIG. 7, as shown in FIG. 8, an embodiment of this application further provides a message transmission path between the first node and the second node, as shown by a double-arrow curve in FIG. 8.

In a possible implementation, when the target operation is modification, the operation request for the target data object further indicates to-be-modified content. When the target operation is insertion, the operation request of the target data object further indicates to-be-inserted content. When the target operation is searching, the operation request for the target data object further indicates to-be-searched content.

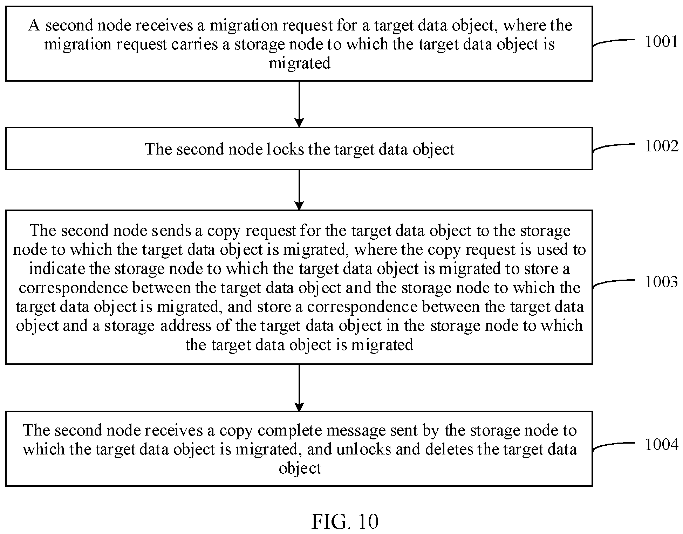

In a possible implementation, as shown in FIG. 9, the data center further includes a management node. The management node may be a node in nodes configured to perform computation in the data center, or may be a node other than the node that performs computation. The management node is configured to manage migration processing and the like of a data object on each node in the data center. As shown in FIG. 10, a migration processing procedure may be as follows:
Step 1001: A second node receives a migration request for a target data object, where the migration request carries a storage node to which the target data object is migrated.

In this embodiment, the management node determines, based on load of each node in the data center, that load on the second node is relatively heavy, and the management node determines to migrate the target data object on the second node to a node with relatively light load currently (that is, the storage node to which the target data object is migrated); alternatively, the management node determines that communication distances between all nodes that access the target data object and the second node are relatively long, and the management node determines to migrate the target data object to a node that is relatively close to the node that accesses the target data object (that is, the storage node to which the target data object is migrated). Alternatively, the management node receives a migration indication message of the target data object by using an interface provided for a user, where the migration indication message is used to indicate to migrate the target data object to the storage node to which the target data object is migrated.

Then, the management node may send a migration request for the target data object to the second node, where the migration request carries an identifier of the storage node to which the target data object is migrated. A communications module of the second node may receive the migration request that is for the target data object and that is sent by the management node. The communications module of the second node may send the migration request to a database instance of the second node.

Step 1002: The second node locks the target data object.

In this embodiment, the database instance of the second node receives the migration request, parses the migration request to obtain an identifier of the target data object, and then locks the target data object. "Locking the target data object" herein means that no access processing can be performed on the target data object before the target data object is unlocked. The database instance of the second node sends a copy request and content of the storage node to which the target data object is migrated to the communications module of the second node, where the copy request includes content of the target data object.

Step 1003: The second node sends the copy request for the target data object to the storage node to which the target data object is migrated, where the copy request is used to indicate the storage node to which the target data object is migrated to store a correspondence between the target data object and the storage node to which the target data object is migrated, and stores a correspondence between the target data object and a storage address of the target data object in the storage node to which the target data object is migrated.

In this embodiment, the communications module of the second node receives the copy request and the identifier of the storage node to which the target data object is migrated. The communications module of the second node sends the copy request to a communications module of the storage node to which the target data object is migrated.

After receiving the copy request, the storage node to which the target data object is migrated may parse the copy request to obtain the content of the target data object. The storage node to which the target data object is migrated may determine, in local storage space (that is, a memory), a storage address for storing the target data object. Then, the storage node to which the target data object is migrated stores a correspondence between the target data object and the storage address, and stores the correspondence between the target data object and the storage node to which the target data object is migrated. A database instance of the storage node to which the target data object is migrated may send a copy complete message to the communications module of the storage node to which the target data object is migrated, where the copy complete message includes the identifier of the target data object.

Step 1004: The second node receives the copy complete message sent by the storage node to which the target data object is migrated, and unlocks and deletes the target data object.

In this embodiment, the communications module of the storage node to which the target data object is migrated sends the copy complete message to the second node. After receiving the copy complete message sent by the storage node to which the target data object is migrated, the communications module of the second node may send the copy complete message to the database instance of the second node. The database instance of the second node may unlock the target data object, and then delete the target data object at a target storage address of the target data object. The database instance of the second node may send a migration complete message to the communications module of the second node.

Optionally, after step 1004, the second node sends the migration complete message to the node that sends the migration request. Specifically, the communications module of the second node sends the migration complete message to the management node. After receiving the migration complete message, the management node may determine that migration of the target data object is completed.

In a possible implementation, to ensure that another node can correctly access the target data object, before step 1004, the following processing may be further performed:
The second node sends a change message of a storage node of the target data object to another node, where the change message is used to indicate a node that receives the change message to change the storage node corresponding to the target data object to the storage node to which the target data object is migrated, and the another node is a node other than the storage node to which the target data object is migrated and the second node in the data center. The second node receives a change complete message sent by another node.

In this embodiment, the database instance of the second node may determine nodes other than the second node and the storage node to which the target data object is migrated in the data center. The database instance of the second node sends the change message and an identifier of another node to the communications module of the second node, where the change message includes the identifier of the target data object and the storage node to which the target data object is migrated. The communications module of the second node sends the change message to another node indicated by the identifier of the another node. After a communications module of the another node receives the change message, the another node may change, by using a database instance of the another node, the second node corresponding to the target data object in the correspondence between the target data object and the second node stored in the another node to the storage node to which the target data object is migrated. Then, the database instance of the another node sends the change completion message to the communication module of the another node. The communications module of the another node sends the change complete message to the second node. After receiving the change complete message sent by the another node, the communications module of the second node may unlock the target data object, and delete the target data object. In this way, when accessing the target data object subsequently, another node may access the target data object in the storage node to which the target data object is migrated instead of accessing the target data object in the second node.

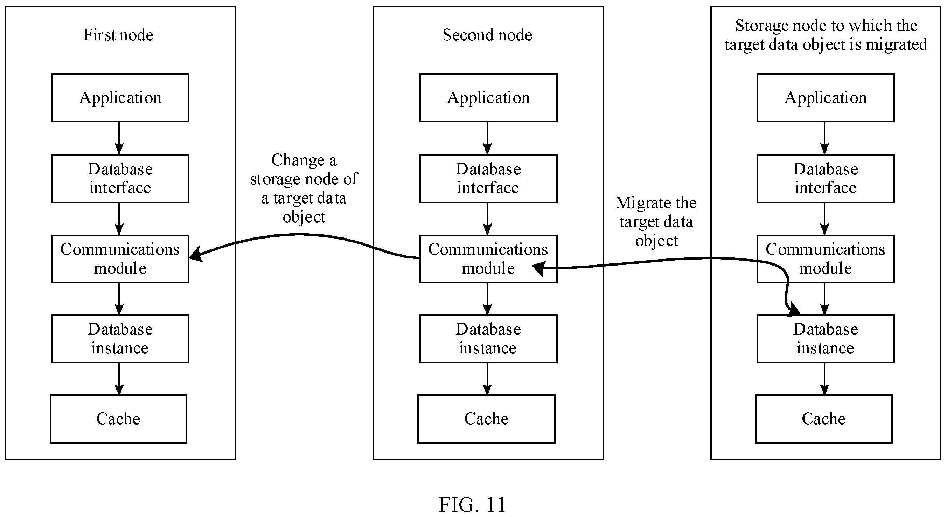

In addition, to facilitate understanding of the procedure in FIG. 10, as shown in FIG. 11, an embodiment of this application further provides message transmission paths between the second node and the storage node to which the target data object is migrated and between the second node and the first node, as shown by a double-arrow curve in FIG. 11.

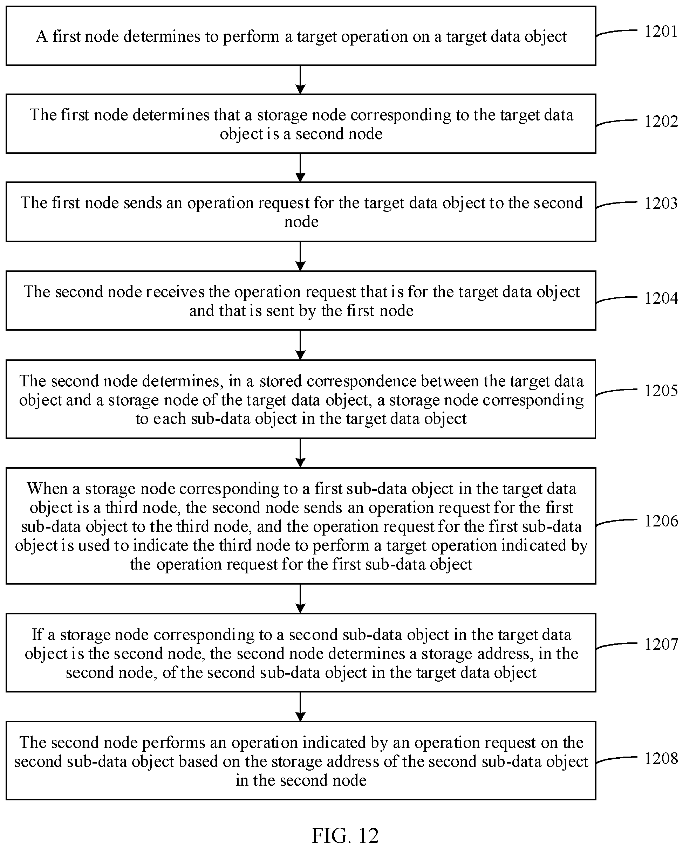

In a possible implementation, the target data object may be a nested data object, and the nested data object is a data object that includes a plurality of sub-data objects and that is not stored in one storage node. In this case, a processing procedure of a target operation on the target data object may be as shown in FIG. 12.

Step 1201: A first node determines to perform the target operation on the target data obj ect.

Step 1202: The first node determines that a storage node corresponding to the target data object is a second node.

Step 1203: The first node sends an operation request for the target data object to the second node.

Processing in step 1201 to step 1203 is completely the same as processing in step 401 to step 403. Details are not described herein again.

Step 1204: The second node receives the operation request that is for the target data object and that is sent by the first node.

Step 1205: the second node determines, in a stored correspondence between the target data object and a storage node of the target data object, a storage node corresponding to each sub-data object in the target data object.

In this embodiment, when the target data object is a nested data object and the target operation is not a create operation, the storage node corresponding to each sub-data object of the target data object is stored in the correspondence between the target data object and the storage node of the target data object. A communications module of the second node searches the stored correspondence between the target data object and the storage node of the target data object for the storage node corresponding to each sub-data object in the target data object.

Step 1206: When a storage node corresponding to a first sub-data object in the target data object is a third node, the second node sends an operation request for the first sub-data object to the third node, and the operation request for the first sub-data object is used to indicate the third node to perform a target operation indicated by the operation request for the first sub-data object.

In this embodiment, when the communications module of the second node determines that the storage node corresponding to the first sub-data object in the target data object is the third node, the communications module of the second node may send the operation request for the first sub-data object to the third node, and the operation request includes an identifier of the first sub-data object. After receiving the operation request for the first sub-data object, a communications module of the third node may send the operation request for the first sub-data object to a database instance of the third node. The database instance of the third node may search a correspondence between the data object and a storage address for a storage address corresponding to the first sub-data object. Then, the database instance of the third node accesses the storage address, and performs the target operation indicated by the operation request for the first sub-data object on the first sub-data object. Then, after completing the target operation, the database instance of the third node generates a first execution result, and sends the first execution result and an identifier of the second node to the communications module of the third node. The communications module of the third node sends the first execution result to the second node. The communications module of the second node receives the first execution result sent by the third node.

It should be noted herein that the third node is a node other than the second node in the data center. In this case, the third node may alternatively be the first node, or may not be the first node.

Step 1207: If a storage node corresponding to a second sub-data object in the target data object is the second node, the second node determines a storage address, in the second node, of the second sub-data object in the target data object.

The second sub-data object belongs to the target data object, and is different from the first sub-data object. When the target data object is a nested data object, the correspondence between the target data object and the storage address of the target data object includes a storage address corresponding to a sub-data object stored on the second node in the target data object.

In this embodiment, when the communications module of the second node determines that the storage node corresponding to the second sub-data object in the target data object is the second node, the communications module of the second node may send an operation request for the second sub-data object of the target data object to the database instance of the second node. After receiving the operation request, the database instance of the second node may determine, from the stored correspondence between the target data object and the storage address of the target data object, a storage address corresponding to the second sub-data object of the target data object, that is, obtain the storage address of the second sub-data object in the second node.

Step 1208: The second node performs an operation indicated by the operation request on the second sub-data object based on the storage address of the second sub-data object in the second node.

In this embodiment, the database instance of the second node may access the storage address of the second sub-data object in the second node, perform the operation indicated by the operation request on the second sub-data object, and obtain a second execution result. The database instance of the second node returns the second execution result to the communications module of the second node.

Optionally, after step 1208, the communications module of the second node returns the first execution result and the second execution result to the first node. A communications module of the first node receives the first execution result and the second execution result. The communications module of the first node returns the first execution result and the second execution result to a database interface of the first node, and the database interface of the first node returns the first execution result and the second execution result to an application of the first node.

In this way, because an operation on the target data object is performed by a node storing the target data object, a communication delay of accessing the target data object each time can be reduced.

For the procedure in FIG. 12, the following example is further provided: The target data object is a nested vector <vector<string>> (<vector<string>>), and each sub-data object in the target data object is a vector <string>. It is assumed that the operation performed on the target data object is searching for the first vector including "string 1 (strl) =hello world" in the target data object, and str1 needs to be searched inside each sub-data object of the target data object through iteration during searching. The first sub-data object is a sub-data object 1, and an operation (find(str1)) for searching for str1 needs to be executed in the sub-data object 1. The communications module of the second node determines, from the stored correspondence between the target data object and the storage node of the target data object, that a storage node corresponding to the sub-data object 1 is the third node. The communications module of the second node sends the operation request for searching for str1 to the third node. The communications module of the third node receives the operation request for searching for str1, and forwards the operation request to the database instance of the third node. The database instance of the third node finds, in the correspondence between the data object and the storage address, a storage address corresponding to the sub-data object 1, and finds the sub-data object 1 in the storage address. The database instance of the third node performs an operation of searching for str1 on the sub-data object 1 to obtain a first execution result, and the communications module of the third node returns the first execution result to the communications module of the second node. When the second sub-data object is the sub-data object 2, the database instance of the second node may find, in the correspondence between the target data object and the storage address of the target data object, a storage address corresponding to the sub-data object 2, and find the sub-data object 2 at the storage address. The database instance of the second node performs an operation of searching for str1 on the sub-data object 2 to obtain a second execution result. The communications module of the second node returns the first execution result and the second execution result to the communications module of the first node, and the communications module of the first node returns the first execution result and the second execution result to the application of the first node.

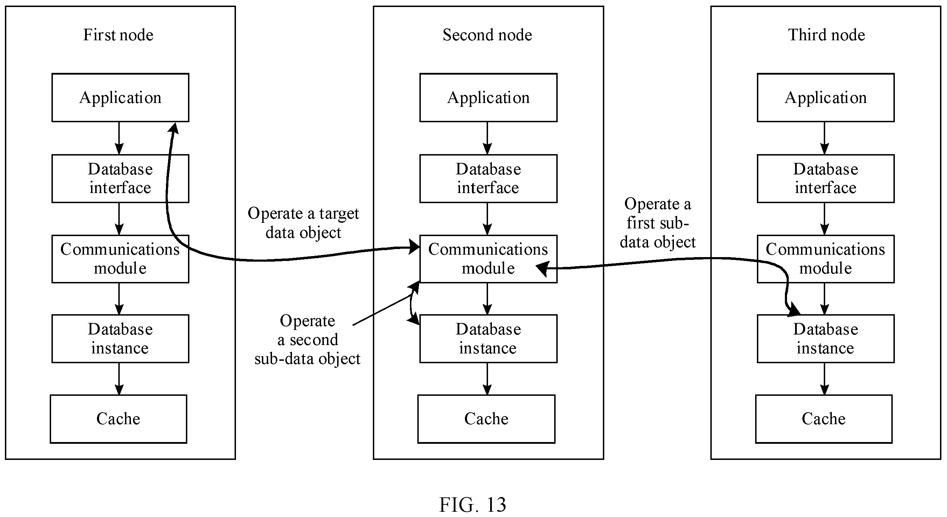

In addition, to facilitate understanding of the procedure in FIG. 12, as shown in FIG. 13, an embodiment of this application further provides a message transmission path between the first node, the second node, and the third node, as shown by a double-arrow curve in FIG. 13.

Corresponding to the procedure in FIG. 13, the target data object is a nested data object. An embodiment of this application further provides a process of creating the target data object.

The application of the first node needs to create the target data object, and the application may invoke the database interface to indicate the database interface to create the target data object. The database interface of the first node may determine a storage node corresponding to the target data object. If the storage node is the second node, the database interface of the first node stores a correspondence between the target data object and the second node. The database interface of the first node sends the identifier of the second node and content of the target data object to the communications module of the first node. The communications module of the first node receives the identifier of the second node and the content of the target data object. The communications module of the first node sends a creation request for the target data object to the communications module of the second node. The creation request includes an identifier of the target data object and the content of the target data object. The communications module of the second node receives the creation request that is for the target data object and that is sent by the communications module of the first node. The communications module of the second node sends the creation request to the database instance of the second node. If the storage space of the second node can store only some sub-data objects of the target data object, a storage node of each sub-data object determined by the database instance of the second node may not be the second node.

When the storage node of the first sub-data object is the third node, the database instance of the second node sends an identifier of the third node and content of the first sub-data object to the communications module of the second node, and the communications module of the second node sends a creation request for the first data object to the third node, where the creation request includes the content of the first sub-data object. The communications module of the third node sends the creation request to the database instance of the third node, and the database instance of the third node determines a storage address of the first sub-data object in the local storage space. The database instance of the third node stores the first sub-data object at the storage address, and stores a correspondence between the first sub-data object and the storage address. Then, the database instance of the third node sends a creation completion notification to the communications module of the third node, and the communications module of the third node sends the creation completion notification to the communications module of the second node. When the storage node of the second sub-data object is the second node, the database instance of the second node stores the second sub-data object (this process is the same as the foregoing process of creating the target data object by the second node. Details are not described herein again). After the communications module of the second node completes creation of all the target data objects, the communications module of the second node sends a creation result to the communications module of the first node. The communications module of the first node sends the creation completion notification to the application of the first node.

In this embodiment of this application, an operation on the target data object is performed by a node storing the target data object, and a large quantity of operations do not need to be implemented across networks. Therefore, a delay of operating the data object can be reduced. In addition, operations can be performed on data objects of various data structures. Furthermore, when an operation is performed on a data object, the data object is directly processed by using an interface function of the database interface, instead of processing a part of the data object, thereby reducing an access delay.

It should be noted that the database instance may be encapsulated based on a standard template library (Standard template library, STL), and externally provides a database interface for an application to invoke. An existing application can directly run without modification or recompilation. Therefore, implementation difficulty is relatively low. Certainly, the database instance may alternatively be encapsulated in another manner. This is not limited in this embodiment of this application.

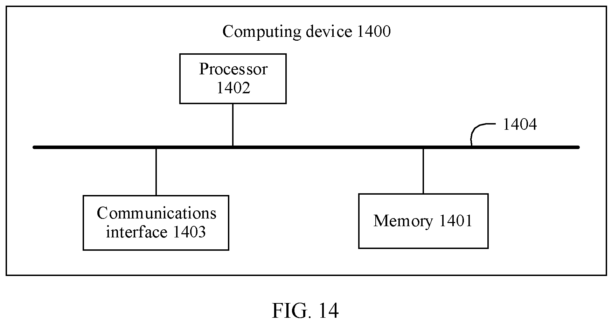

An embodiment of this application further provides a computing device for operating a data object. FIG. 14 provides an example of a possible architectural diagram of a computing device 1400.

The computing device 1400 includes a memory 1401, a processor 1402, a communications interface 1403, and a bus 1404. The memory 1401, the processor 1402, and the communications interface 1403 are communicatively connected to each other through the bus 1404.

The memory 1401 may be a read-only memory (Read Only Memory, ROM), a static storage device, a dynamic storage device, or a random access memory (Random Access Memory, RAM). The memory 1401 may store a program. When the program stored in the memory 1401 is executed by the processor 1402, the processor 1402 and the communications interface 1403 are configured to perform a data object operation method, for example, perform the method performed by the first node described in the foregoing embodiment, or perform the method performed by the second node described in the foregoing embodiment. The memory 1401 may further store a data set.

The processor 1402 may be a general-purpose CPU, a microprocessor, an application specific integrated circuit (Application Specific Integrated Circuit, ASIC), a graphics processing unit (graphics processing unit, GPU), or one or more integrated circuits.

The processor 1402 may alternatively be an integrated circuit chip and has a signal processing capability. In an implementation process, some or all functions of the apparatus for operating on a data object in this application may be implemented by using an integrated logic circuit of hardware in the processor 1402, or by using instructions in a form of software. The processor 1402 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and the logical block diagrams disclosed in the foregoing embodiments of this application. The general purpose processor may be a microprocessor, or the processor may be any conventional processor, or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1401, and the processor 1402 reads information in the memory 1401 and completes some functions of the apparatus for operating a data object in embodiments of this application in combination with hardware of the processor 1402.

The communications interface 1403 uses a transceiver module, for example, but not limited to a transceiver, to implement communication between the computing device 1400 and another device or a communications network. For example, a data set may be obtained by using the communications interface 1403.

The bus 1404 may include a path for transmitting information between components (for example, the memory 1401, the processor 1402, and the communications interface 1403) of the computing device 1400.

The descriptions of procedures corresponding to the foregoing accompanying drawings have respective focuses. For a part that is not described in detail in a procedure, refer to related descriptions of another procedure.

In the foregoing embodiment, all or part of the software, hardware, firmware, or any combination thereof may be implemented. When the software is used for implementation, all or part of the implementation may be implemented in a form of a computer program product. The computer program product includes one or more computer instructions. When the computer program instructions are loaded and executed on a server or a terminal, all or some of the processes or functions according to embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a server or a terminal, or a data storage device, such as a server or a data center, integrating one or more usable media. The usable media may be a magnetic medium (for example, a floppy disk, a hard disk drive, a magnetic tape, or the like), an optical medium (for example, a digital video disk (Digital Video Disk, DVD), or the like), a semiconductor medium (for example, a solid-state drive, or the like).

## Claims

1. An apparatus for operating a data object, applied to a first node of a data center, wherein the data center comprises the first node and a second node, and the apparatus comprises:
an application, configured to invoke a database interface, and specify to perform a target operation on a target data object;
the database interface, configured to determine that a storage node corresponding to the target data object is the second node; and
a communications module, configured to send an operation request for the target data object to the second node, wherein the operation request is used to indicate the second node to perform the target operation on the target data object.

2. The apparatus according to claim 1, wherein when the target operation is a creation operation, the database interface is configured to: determine, based on one or more of node affinity, a load status, bandwidth, a delay, or central processing unit CPU usage of each node in the data center, that the storage node corresponding to the target data object is the second node; and
the database interface is further configured to store a correspondence between the target data object and the second node.

3. The apparatus according to claim 1, wherein the database interface is configured to:
determine, in a correspondence between the target data object and the storage node of the target data object, that the storage node corresponding to the target data object is the second node.

4. The apparatus according to any one of claims 1 to 3, wherein a data structure of the target data object is any one of a vector, a set, and a queue.

5. The apparatus according to any one of claims 1 to 4, wherein a type of the target operation further comprises one or more of search, insertion, modification, or deletion.

6. An apparatus for operating a data object, applied to a second node of a data center, wherein the data center comprises a first node and the second node, and the apparatus comprises:
a communications module, configured to receive an operation request that is for a target data object and that is sent by the first node; and
a database instance, configured to: determine a target storage address of the target data object in the second node; and perform, based on the target storage address, a target operation indicated by the operation request on the target data object.

7. The apparatus according to claim 6, wherein when the target operation is a creation operation, the database instance is configured to store the target data object at the target storage address, and
the database instance is further configured to: store a correspondence between the target data object and the target storage address, and store a correspondence between the target data object and the second node.

8. The apparatus according to claim 6, wherein the database instance is configured to determine, in a correspondence between the target data object and a storage address of the target data object, the target storage address of the target data object in the second node.

9. The apparatus according to claim 6 or 8, wherein when the target operation is deletion, the database instance is configured to:
access the target storage address, and delete the target data object;
delete the correspondence between the target data object and the storage address of the target data object; and
delete a correspondence between the target data object and a storage node of the target data obj ect.

10. The apparatus according to claim 9, wherein the communications module is further configured to:
before the correspondence between the target data object and the storage node of the target data object is deleted, send a deletion message to a node other than the second node in the data center, wherein the deletion message is used to indicate the node that receives the deletion message to delete the correspondence between the target data object and the storage node of the target data obj ect.

11. The apparatus according to any one of claims 6 to 10, wherein the communications module is further configured to: receive a migration request for the target data object, wherein the migration request carries an identifier of a storage node to which the target data object is migrated;
the database instance is further configured to lock the target data object;
the communications module is further configured to: send a copy request for the target data object to the storage node to which the target data object is migrated, wherein the copy request is used to indicate the storage node to which the target data object is migrated to store a correspondence between the target data object and the storage node to which the target data object is migrated, and to store a correspondence between the target data object and a storage address of the target data object in the storage node to which the target data object is migrated; and receive a copy complete message sent by the storage node to which the target data object is migrated; and
the database instance is further configured to unlock and delete the target data object.

12. The apparatus according to claim 11, wherein the communications module is further configured to:
before the target data object is unlocked and deleted, send a change message of the storage node of the target data object to another node, wherein the change message is used to indicate a node that receives the change message to replace a storage node corresponding to the target data object with the storage node to which the target data object is migrated, and the another node is a node other than the storage node to which the target data object is migrated and the second node in the data center; and
receive a change complete message sent by the another node.

13. The apparatus according to claim 6, wherein when the target data object is a nested data object, the communications module is further configured to: determine a storage node corresponding to each sub-data object in the target data object; and when a storage node corresponding to a first sub-data object in the target data object is a third node, send an operation request for the first sub-data object to the third node, wherein the operation request for the first sub-data object is used to indicate the third node to perform a target operation indicated by the operation request for the first sub-data object; and
the database instance is further configured to: if a storage node corresponding to a second sub-data object in the target data object is the second node, determine a storage address of the second sub-data object in the second node; and perform a target operation indicated by the operation request on the second sub-data object based on the storage address of the second sub-data object in the second node.

14. The apparatus according to any one of claims 6 to 13, wherein a data structure of the target data object is any one of a vector, a set, and a queue.

15. A method for operating a data object, applied to a data center, wherein the data center comprises a first node and a second node, and the method comprises:
determining, by the first node, to perform a target operation on a target data object;
determining, by the first node, that a storage node corresponding to the target data object is the second node; and
sending, by the first node, an operation request for the target data object to the second node, wherein the operation request is used to indicate the second node to perform the target operation on the target data object.

16. The method according to claim 15, wherein when the target operation is a creation operation, the determining, by the first node, that a storage node corresponding to the target data object is the second node comprises:
determining, by the first node based on one or more of node affinity, a load status, bandwidth, a delay, or central processing unit CPU usage of each node in the data center, that a storage node corresponding to the target data object is the second node; and
the method further comprises: storing, by the first node, a correspondence between the target data object and the second node.

17. The method according to claim 15, wherein the determining, by the first node, that a storage node corresponding to the target data object is the second node comprises:
determining, by the first node in a correspondence between the target data object and a storage node of the target data object, that the storage node corresponding to the target data object is the second node.

18. The method according to any one of claims 15 to 17, wherein a data structure of the target data object is any one of a vector, a set, and a queue.

19. The method according to any one of claims 15 to 18, wherein a type of the target operation further comprises one or more of search, insertion, modification, or deletion.

20. A method for operating a data object, applied to a data center, wherein the data center comprises a first node and a second node, and the method comprises:
receiving, by the second node, an operation request that is for a target data object and that is sent by the first node;
determining, by the second node, a target storage address of the target data object in the second node; and
performing, by the second node based on the target storage address, a target operation indicated by the operation request on the target data object.

21. The method according to claim 20, wherein when the target operation is a creation operation, the performing, by the second node based on the target storage address, a target operation indicated by the operation request on the target data object comprises:
storing the target data obj ect at the target storage address; and
the method further comprises: storing, by the second node, a correspondence between the target data object and the target storage address, and storing a correspondence between the target data object and the second node.

22. The method according to claim 19, wherein the determining, by the second node, a target storage address of the target data object in the second node comprises:
determining, by the second node in a correspondence between the target data object and a storage address of the target data object, the target storage address of the target data object in the second node.

23. The method according to claim 20 or 22, wherein when the target operation is deletion, the performing, based on the target storage address, an operation indicated by the operation request on the target data object comprises:
accessing, by the second node, the target storage address, and deleting the target data object;
deleting, by the second node, the correspondence between the target data object and the storage address of the target data object; and
deleting, by the second node, a correspondence between the target data object and a storage node of the target data object.

24. The method according to claim 23, wherein before the deleting a correspondence between the target data object and a storage node of the target data object, the method further comprises:
sending, by the second node, a deletion message to a node other than the second node in the data center, wherein the deletion message is used to indicate a node that receives the deletion message to delete the correspondence between the target data object and the storage node of the target data object.

25. The method according to any one of claims 20 to 24, wherein the method further comprises:
receiving, by the second node, a migration request for the target data object, wherein the migration request carries an identifier of a storage node to which the target data object is migrated;
locking, by the second node, the target data object;
sending, by the second node, a copy request for the target data object to the storage node to which the target data object is migrated, wherein the copy request is used to indicate the storage node to which the target data object is migrated to store a correspondence between the target data object and the storage node to which the target data object is migrated, and to store a correspondence between the target data object and a storage address of the target data object in the storage node to which the target data object is migrated; and
receiving, by the second node, a copy complete message sent by the storage node to which the target data object is migrated, and unlocking and deleting the target data object.

26. The method according to claim 25, wherein before the unlocking and deleting the target data object, the method further comprises:
sending, by the second node, a change message of a storage node of the target data object to another node, wherein the change message is used to indicate a node that receives the change message to change a storage node corresponding to the target data object to the storage node to which the target data object is migrated, and the another node is a node other than the storage node to which the target data object is migrated and the second node in the data center; and
receiving, by the second node, a change complete message sent by the another node.

27. The method according to claim 20, wherein if the target data object is a nested data object, the method further comprises:
determining, by the second node, a storage node corresponding to each sub-data object in the target data object;
when a storage node corresponding to a first sub-data object in the target data object is a third node, sending, by the second node, an operation request for the first sub-data object to the third node, wherein the operation request for the first sub-data object is used to indicate the third node to perform a target operation indicated by the operation request for the first sub-data object;
when a storage node corresponding to a second sub-data object in the target data object is the second node, determining, by the second node, a storage address of the second sub-data object in the second node; and
performing, by the second node based on the storage address of the second sub-data object in the second node, a target operation indicated by the operation request on the second sub-data object.

28. A computing device for operating a data object, wherein the computing device comprises a processor and a memory;
the memory stores computer instructions; and
the processor executes the computer instructions, so that the computing device performs the method according to any one of claims 15 to 19, or the computing device performs the method according to any one of claims 20 to 27.

29. A computer-readable storage medium, wherein the computer-readable storage medium stores computer instructions, and when the computer instructions in the computer-readable storage medium are executed by a computing device, the computing device is enabled to perform the method according to any one of claims 15 to 19, or the computing device is enabled to perform the method according to any one of claims 20 to 27.
